# EUROPÄISCHE PATENTSCHRIFT

(11) **EP 1 900 972 B1**
(45) Veröffentlichungstag und Bekanntmachung des Hinweises auf die Patenterteilung: **11.11.2009**
(21) Anmeldenummer: 07115498.3
(22) Anmeldetag: 03.09.2007
(51) Int. Cl.: F16H 47/02

(54) **Hydrostatisch-mechanisches Getriebe**
Hydrostatic mechanical transmission
Engrenage hydrostatique-mécanique

(30) Priorität: 14.09.2006 DE 102006043290
(43) Veröffentlichungstag der Anmeldung: 19.03.2008
(73) Patentinhaber: ZF Friedrichshafen AG, 88038 Friedrichshafen (DE)
(72) Erfinder: Legner, Jürgen, 88048 Friedrichshafen (DE); Baumann, Klaus, 88239 Wangen (DE); Häffner, Martin, 88045 Friedrichshafen (DE)

(56) Entgegenhaltungen:
- EP-A- 0 931 932
- EP-A- 1 148 275
- DE-A1- 2 327 472
- DE-A1- 3 312 663
- DE-A1- 19 512 976
- DE-A1-102004 038 504
- US-A- 3 902 567
- US-A- 5 078 659

## Beschreibung

Die Erfindung bezieht sich auf ein hydrostatisch-mechanisches Getriebe nach der im Oberbegriff von Anspruch 1 näher definierten Art.

Die DE 10 2004 023 631 A1 offenbart ein hydrostatisch-mechanisches Getriebe mit einem Radialkolbenmotor mit einer Kurbelwelle, wobei die Kurbelwelle ein Stirnrad antreibt, welches mit einem weiteren Stirnrad in Wirkverbindung ist und den Abtrieb antreibt.

Gattungsgemäße Getriebe werden beispielsweise in Arbeitsmaschinen, wie Radlader, verwendet.

Der vorliegenden Erfindung liegt die Aufgabe zugrunde, ein hydrostatisch-mechanisches Getriebe zu schaffen, welches sich durch einen verbesserten Wirkungsgrad auszeichnet.

Erfindungsgemäß weist das hydrostatisch-mechanische Getriebe mindestens einen Radialkolbenmotor auf, welcher eine Kurbelwelle aufweist, welche ein Stirnrad antreibt. Die Kurbelwelle ist über drei Lagerstellen gelagert, die jeweils in einem anderen Teil des dreiteiligen Getriebegehäuses angeordnet sind, wodurch die Kurbelwelle so dimensioniert werden kann, dass bei der maximal zulässigen Durchbiegung der zur Verfügung stehende Bauraum eingehalten werden kann. Vorzugsweise ist eine Lagerstelle zwischen dem Stirnrad und dem exzentrischen Teil der Kurbelwelle und die beiden anderen Lagerstellen jeweils im Bereich der Enden der Kurbelwelle angeordnet.

In einer weiteren Ausgestaltungsform der Erfindung ist das Stirnrad schrägverzahnt ausgeführt und die beiden benachbart zum exzentrischen Teil der Kurbelwelle angeordneten Lager sind als Kegelrollenlager ausgeführt, wodurch das Kegelrollenlager, welches im Bereich der Druckmittelzuführung zu den Zylindern angeordnet ist, eine Axialkraftkomponente erzeugt, welche der hydraulischen Kraft im Bereich des Druckmittelverteilers entgegenwirkt, wodurch die Verformung des Gehäuseteils, in welchem die Druckmittelzuführungen angeordnet sind, reduziert werden. Indem das Stirnrad beidseitige Lagerstellen aufweist, wird die Radialkraft, welche durch das Zusammenwirken der Stirnräder erzeugt wird, direkt in das Getriebegehäuse eingeleitet, wodurch die Durchbiegung der Kurbelwelle zusätzlich verringert wird. Da der Druckmittelverteiler über eine Verbindungswelle mit der Kurbelwelle verbunden ist, wird durch die Reduzierung der Durchbiegung der Kurbelwelle auch die Radialbewegung des Druckmittelverteilers reduziert.

In einer weiteren Ausgestaltungsform der Erfindung besteht das Getriebegehäuse aus drei Getriebegehäuseteilen:
- einem ersten Gehäuseteil, in welchem die Stirnräder sowie die erste Lagerstelle im Bereich des Stirnrads angeordnet ist,
- einem zweiten Gehäuseteil, welches die mittlere Lagerstelle zwischen dem Stirnrad und dem exzentrischen Teil der Kurbelwelle bildet und
- einem dritten Gehäuseteil, welches die dritte Lagerstelle aufnimmt und die Druckmittelzuführungen beinhaltet.

An das dritte Gehäuseteil schließt ein Ventilgehäuse an, welches die Druckmittelverteilung sowie die Druckmittelanschlüsse und weitere Ventile beinhaltet, wodurch dieser Aufbau ermöglicht, dass das erste und zweite Gehäuseteil einen Schmiermittelraum schaffen, in welchem die Stirnräder angeordnet sind, das zweite und dritte Gehäuseteil einen Schmiermittelraum schaffen, in welchem die Hauptbauteile des Radialkolbenmotors angeordnet sind und das Ventilgehäuse die Ventilbauteile aufnimmt.

Vorzugsweise sind der Schmiermittelraum, in welchem sich die Stirnräder befinden, und der Schmiermittelraum, in welchem sich der Radialkolbenmotor befindet, flüssigkeitsdicht gegeneinander abgedichtet.

Vorzugsweise sind die Zylinder des Radialkolbenmotors sowohl in dem Gehäuseteil, an welches das Ventilghäuse anschließt, als auch in dem Gehäuseteil, welches den Radialkolbenmotor vom Stirnradgetriebe trennt, gelagert.

In einer weiteren Ausgestaltungsform treibt das mit der Kurbelwelle in Wirkverbindung stehende Stirnrad ein weiteres Stirnrad an, welches den Abtrieb antreibt, welcher entweder zwei Abtriebsflansche, jeweils an den Enden der Abtriebswelle, oder einen Abtriebsflansch und ein Kegelritzel aufweist, um das hydrostatisch-mechanische Getriebe entweder zwischen der Vorderachse und der Hinterachse des Fahrzeugs einzubauen, um die Vorderachse und die Hinterachse anzutreiben oder direkt an die Hinterachse einzubauen, um die Vorderachse und die Hinterachse anzutreiben oder direkt an die Hinterachse einzubauen, um über den verbleibenden Abtriebsflansch die andere Achse über eine Kardanwelle anzutreiben.

Weitere Merkmale sind der Figuren-Beschreibung zu entnehmen.
Es zeigen:
- Fig. 1: einen Schnitt durch das hydrostatisch-mechanische Getriebe mit einem Radialkolbenmotor;

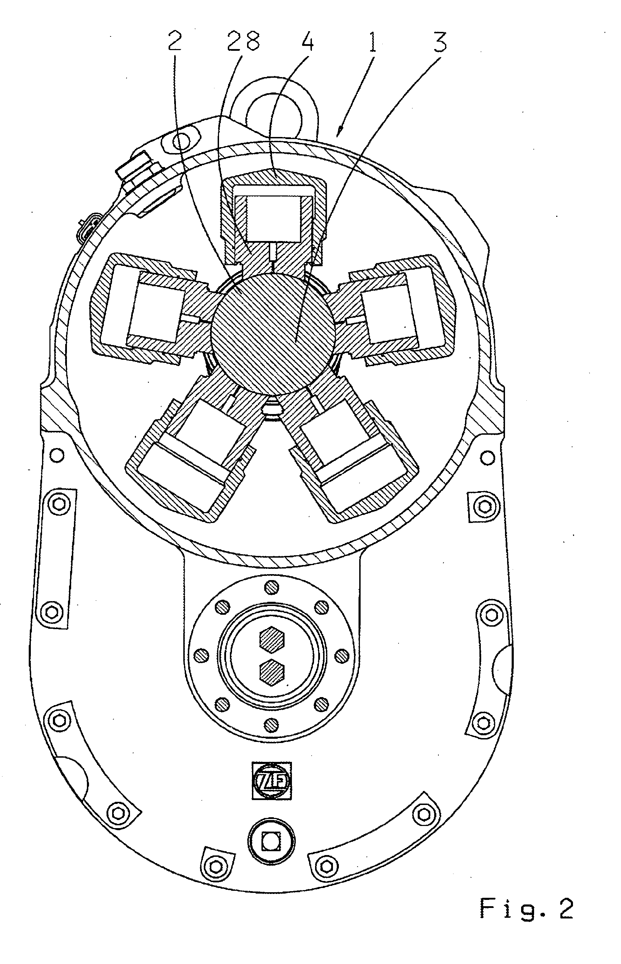

- Fig. 2: einen Schnitt durch den Radialkolbenmotor des hydrostatisch-mechanischen Getriebes nach Fig. 1;
- Fig. 3: einen Schnitt durch ein hydrostatisch-mechanisches Getriebe mit zwei Radialkolbenmotoren;

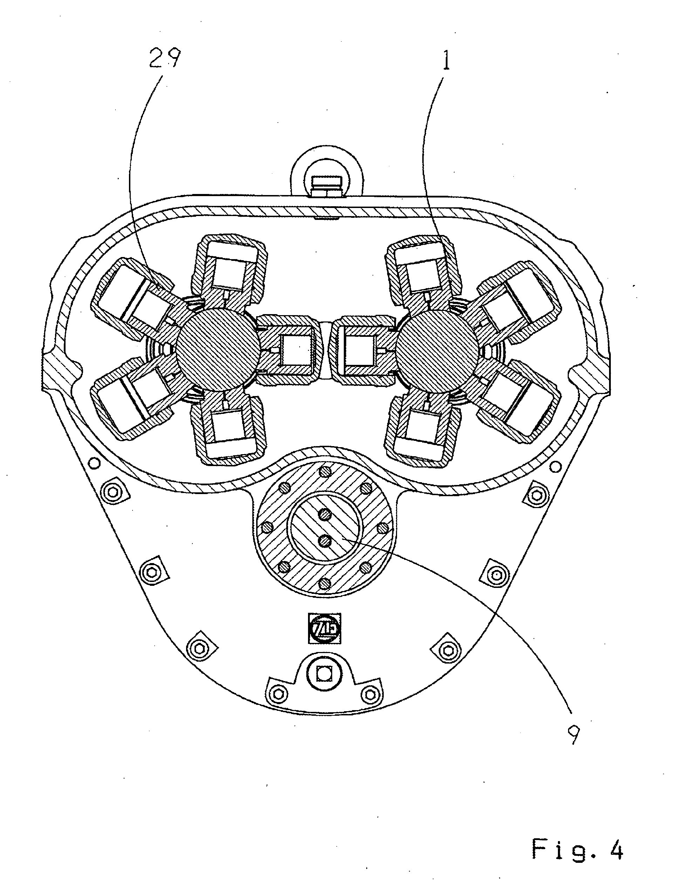

- Fig. 4: einen Schnitt durch die Radialkolbenmotoren des hydrostatisch-mechanischen Getriebes nach Fig. 3;

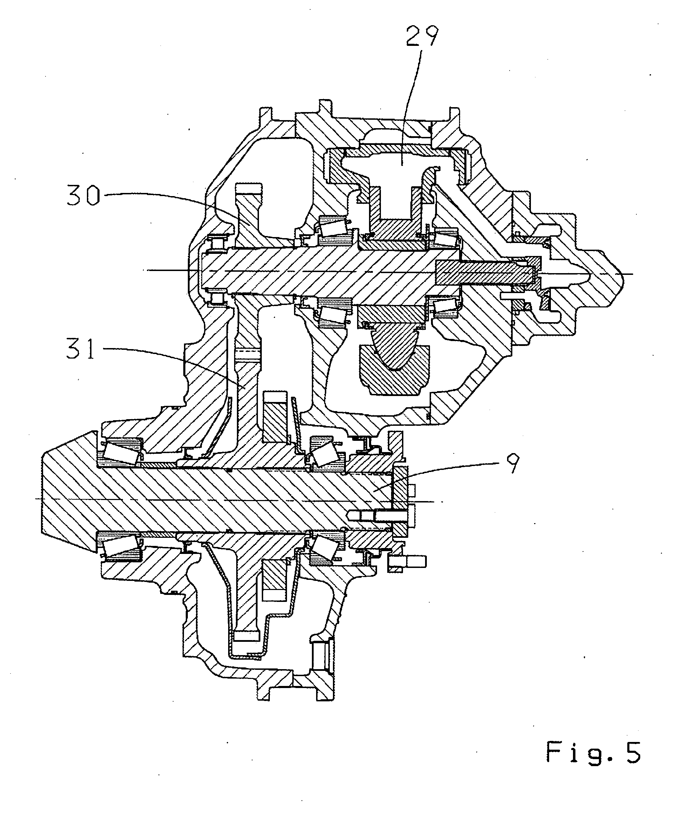

- Fig. 5: einen Schnitt durch den anderen Radialkolbenmotor des hydrostatisch-mechanischen Getriebes nach Fig. 3;

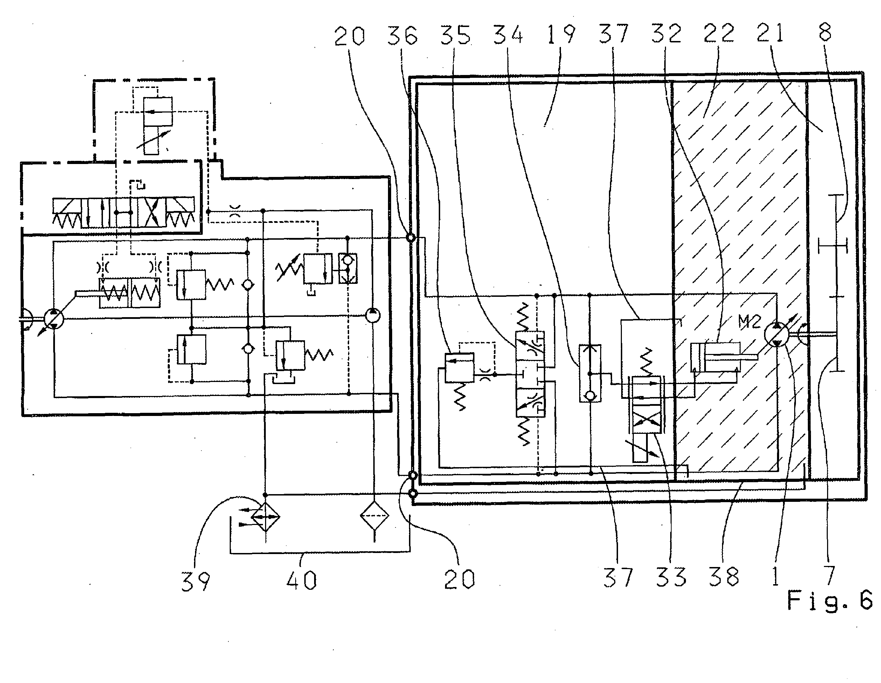

- Fig. 6: ein Hydraulikschema des hydrostatisch-mechanischen Getriebes nach Fig. 1 und

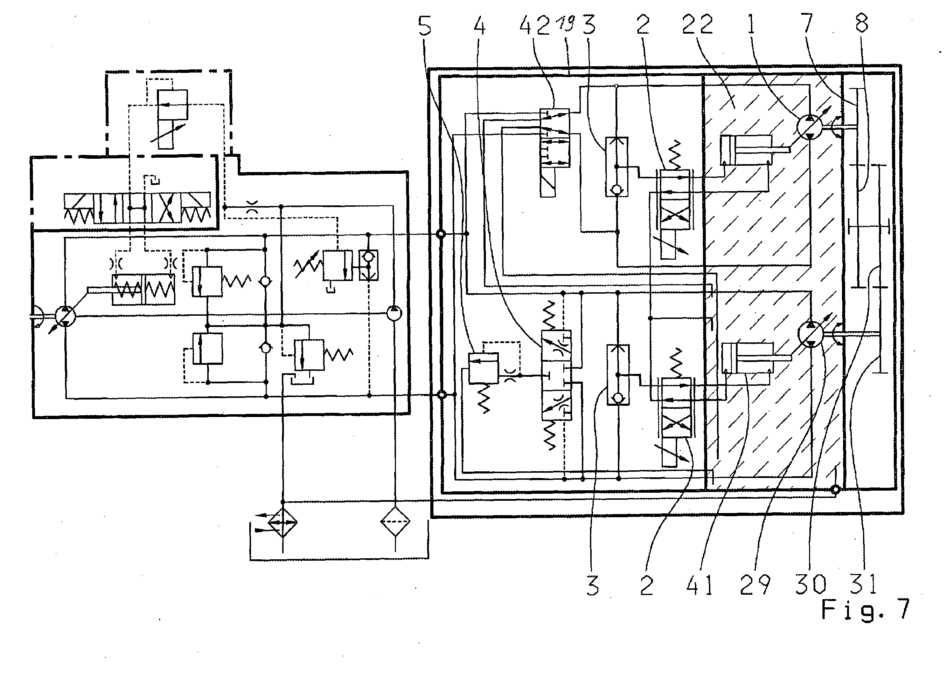

- Fig. 7: ein Hydraulikschema des hydrostatisch-mechanischen Getriebes nach Fig. 3.

### Fig. 1:

Ein hydraulischer Radialkolbenmotor 1 mit einer Kurbelwelle 2 mit einem exzentrischen Abschnitt 3 weist einen Zylinder 4 auf, welcher einerseits in dem dritten Gehäuseteil 5 und dem zweiten Gehäuseteil 6 gelagert ist. Die Kurbelwelle 2 ist mit einem ersten Stirnrad 7 drehfest verbunden. Das erste Stirnrad 7 steht in Wirkverbindung mit einem zweiten Stirnrad 8, welches eine Abtriebswelle 9 antreibt. Weist die Abtriebswelle 9 ein Ritzel 10 und einen Abtriebsflansch 11 auf, so besteht die Möglichkeit, das hydrostatisch-mechanische Getriebe direkt an eine Antriebsachse anzubauen, und es besteht aber auch die Möglichkeit, die Abtriebswelle 9 auf jeder Seite mit einem Abtriebsflansch 11 auzurüsten, um das hydrostatisch-mechanische Getriebe zwischen den Antriebsachsen anzuordnen.

Vorzugsweise sind das erste Stirnrad 7 und das zweite Stirnrad 8 schrägverzahnt ausgeführt. Die Kurbelwelle 2 ist über eine erste Lagerung 12, eine zweite Lagerung 13 und eine dritte Lagerung 14 gelagert Die erste Lagerung 12 ist in dem ersten Gehäuseteil 15 angeordnet und bildet die erste Lagerstelle. Die zweite Lagerung 13 ist zwischen dem Stirnrad 7 und dem exzentrischen Abschnitt 3 im zweiten Gehäuseteil 6 angeordnet und bildet die zweite Lagerstelle. Das zweite Gehäuseteil 6 weist hierfür eine Gehäusewand 16 auf. Die dritte Lagerung 14 ist in dem dritten Gehäuseteil 5 angeordnet und bildet die dritte Lagerstelle. Die Kurbelwelle 2 treibt über eine Verbindungswelle 17, welche auch einstückig mit der Kurbelwelle 2 ausgebildet sein kann, einen Druckmittelverteiler 18 an. Durch die spezielle Lagerung der Kurbelwelle wird die Durchbiegung der Kurbelwelle 2 verringert, wodurch sich auch die Funktion des Druckmittelverteilers 18 verbessert. Der Druckmittelverteiler 18 ist in einem Ventilgehäuse 19 angeordnet, in welchem zusätzlich die benötigten Ventile und die Hauptanschlüsse für die Druckmittelversorgung 20 angeordnet sind. Das erste Gehäuseteil 15 bildet mit dem zweiten Gehäuseteil 6 einen Schmiermittelraum 21, welcher gegenüber dem Raum 22 über eine Dichtung 23 druckflüssigkeitsdicht abgedichtet ist. Somit besteht die Möglichkeit, unterschiedliche Schmiermittel für den Raum 21 und den Raum 22 zu verwenden. Die Ventile im Ventilgehäuse 19 sowie die Leckage des Radialkolbenmotors 1 fließen in den Raum 22 und werden von dort über eine nicht gezeigte Leitung über einen Kühler in ein externes Schmierflüssigkeitsreservoir geleitet. Der Zylinder 4 weist Lagerzapfen 24 auf, über welche der Zylinder 4 drehbar gelagert ist und welche mit einem nicht gezeigten Drehwinkelsensor in Wirkverbindung stehen, wodurch das Schluckvolumen des hydraulischen Motors ermittelt werden kann. Dieses Signal dient als Regelgröße, um das Schluckvolumen des Hydromotors entsprechend einzuregeln. Das zweite Stirnrad 8 ist durch eine Abschirmung 25 abgeschirmt, um die Panschverluste bei drehendem zweitem Stirnrad 8 zu verringern. Die Abschirmung 25 ist vorzugsweise zweiteilig ausgeführt, und es besteht die Möglichkeit, die beiden Bauteile aus einem Kunststoff, beispielsweise einem Polyamid, herzustellen. Die Abschirmung 25 weist mindestens eine Erhebung 26 auf, welche in eine Ausnehmung 27 eingreift, um die Position der Abschirmung 25 zu fixieren. Die beiden einzelnen Teile der Abschirmung 25 sind in axialer Richtung zusammengesteckt und liegen an dem ersten Gehäuseteil 15 und dem zweiten Gehäuseteil 6 in axialer Richtung an, wodurch die Abschirmung 25 geschlossen bleibt. Die Lagerzapfen 24 weisen nicht gezeigte, in axialer Richtung verlaufende Flächen auf, welche verhindern, dass zwischen der Sacklochbohrung im zweiten Gehäuseteil 6 oder im dritten Gehäuseteil 5 und dem Lagerzapfen 24 hydraulischer Druck aufgebaut wird, welcher das zweite Gehäuseteil 6 und das dritte Gehäuseteil 5 auseinanderdrückt.

### Fig. 2:

Der Radialkolbenmotor 1 weist eine Kurbelwelle 2 auf, deren exzentrischer Abschnitt 3 Kolben 28 in den Zylindern 4 bewegt.

### Fig. 3:

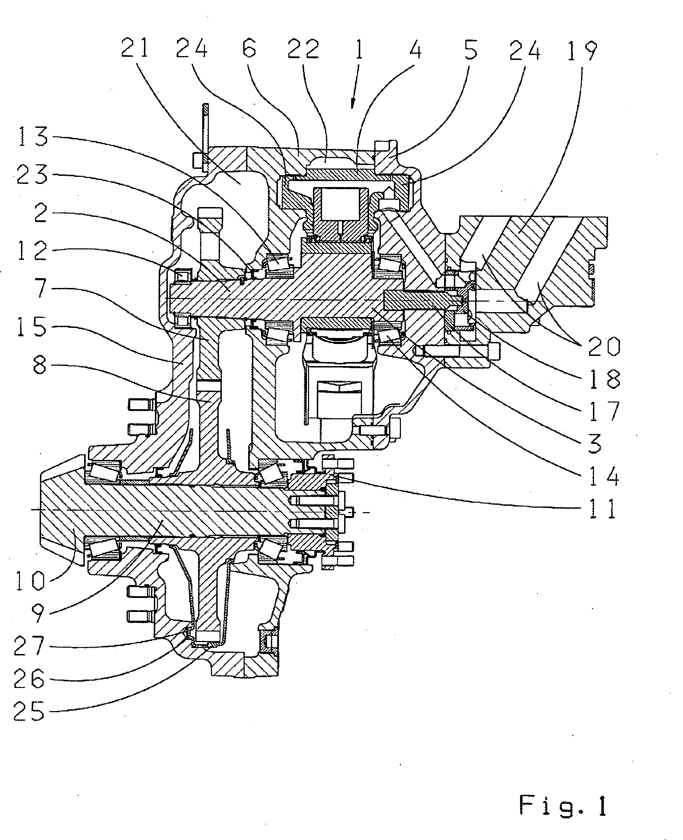

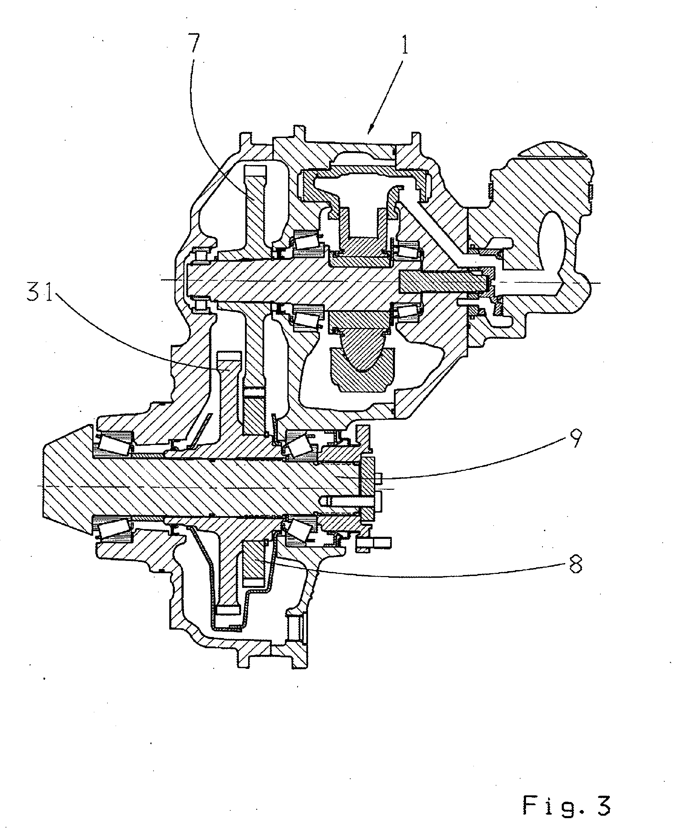

Das hydrostatisch-mechanische Getriebe nach Fig. 3 unterscheidet sich vom hydrostatisch-mechanischen Getriebe nach Fig. 1 dadurch, dass zwei Radialkolbenmotore vorhanden sind, wobei jeder Radialkolbenmotor ein Stirnrad antreibt, welches mit auf einer Abtriebswelle 9 angeordneten Stirnrädern in Wirkverbindung steht. Der erste Radialkolbenmotor 1 treibt das erste Stirnrad 7 an, welches mit dem zweiten Stirnrad 8 in Wirkverbindung steht und die Abtriebswelle 9 antreibt. Der zweite, nicht gezeigte Radialkolbenmotor 29 treibt ein nicht gezeigtes drittes Stirnrad 30 an, welches mit dem vierten Stirnrad 31 in Wirkverbindung steht, welches die Abtriebswelle 9 antreibt.

### Fig. 4:

Der erste Radialkolbenmotor 1 und der zweite Radialkolbenmotor 29 sind in Wirkverbindung mit der Abtriebswelle 9.

### Fig. 5:

Der zweite Radialkolbenmotor 29 treibt über das dritte Stirnrad 30 das vierte Stirnrad 31 und dadurch die Abtriebswelle 9 an.

### Fig. 6:

Im Raum 21 sind das erste Stirnrad 7 und das zweite Stirnrad 8 angeordnet. Im Raum 22 sind der Radialkolbenmotor 1 sowie dessen Hubraum-Verstelleinrichtung 32 angeordnet. Im Ventilgehäuse 19 sind das 4/2-Proportionalventil 33 zur Verstellung des Hubvolumens, das Wechselventil 34 und das Spülventil 35 mit dem dazugehörigen Druckbegrenzungsventil 36 angeordnet. Ebeno weist das Ventilgehäuse 19 die Anschlüsse 20 für die Hauptdruckmittelversorgung auf. Die Entlüftung der Ventile im Ventilgehäuse 19 wird über die Leitungen 37 in den Raum 22 geleitet und von dort über die Leitung 38 und den Kühler 39 in ein Druckmittelreservoir 40. Somit wird der Radialkolbenmotor 1 ausreichend gekühlt und der hydrostatisch-mechanische Antrieb weist nur eine geringe Anzahl von Anschlüssen auf.

### Fig. 7:

Der erste Radialkolbenmotor 1 mit seiner Hubraum-Verstelleinrichtung 32 und der zweite Radialkolbenmotor 29 mit seiner Hubraum-Verstelleinrichtung 41 befinden sich im Raum 22 und die Stirnräder 7, 8, 30 und 31 befinden sich Raum 21. Das Ventilgehäuse 19 weist zusätzlich ein Abschaltventil 42 auf, mittels welchem der erste Radialkolbenmotor 1 vollständig mit dem Raum 22 verbunden werden kann, wodurch der Radialkolbenmotor 1, wenn er auf sein Hubvolumen Null verstellt ist, bei sehr hoher Drehzahl betrieben werden kann, da er einerseits vollständig von der Hochdruckzuführung getrennt ist und durch die Verbindung mit dem Raum 22 Wärmeverluste abführen kann. Dadurch ist es nicht mehr notwendig, eine Abschaltkupplung zwischen dem ersten Radialkolbenmotor 1 und dem ersten Stirnrad 7 anzuordnen.

### Bezugszeichen

- 1: Radialkolbenmotor
- 2: Kurbelwelle
- 3: exzentrischer Abschnitt
- 4: Zylinder
- 5: drittes Gehäuseteil
- 6: zweites Gehäuseteil
- 7: erstes Stirnrad
- 8: zweites Stirnrad
- 9: Abtriebswelle
- 10: Ritzel
- 11: Abtriebsflansch
- 12: erste Lagerung
- 13: zweite Lagerung
- 14: dritte Lagerung
- 15: erstes Gehäuseteil
- 16: Gehäusewand
- 17: Verbindungswelle
- 18: Druckmittelverteiler
- 19: Ventilgehäuse
- 20: Anschlüsse
- 21: Raum
- 22: Raum
- 23: Dichtung
- 24: Lagerzapfen
- 25: Abschirmung
- 26: Erhebung
- 27: Ausnehmung
- 28: Kolben
- 29: zweiter Radialkolbenmotor
- 30: drittes Stirnrad
- 31: viertes Stirnrad
- 32: Hubraum-Verstelleinrichtung
- 33: 4/2-Proportionalventil
- 34: Wechselventil
- 35: Spülventil
- 36: Druckbegrenzungsventil
- 37: Leitung
- 38: Leitung
- 39: Kühler
- 40: Druckmittelreservoir
- 41: Hubraum-Verstelleinrichtung
- 42: Abschaltventil

## Patentansprüche

1. Hydrostatisch-mechanisches Getriebe mit mindestens einem Radialkolbenmotor (1) mit einer Kurbelwelle (2) mit einem exzentrischen Abschnitt (3), wobei die Kurbelwelle (2) ein Stirnrad (7) antreibt und die Kurbelwelle auf jeder Seite des exzentrischen Abschnitts (3) über Lager (13, 14) gelagert ist, **dadurch gekennzeichnet, dass** das Getriebe ein dreiteiliges Getriebegehäuse aufweist und die Kurbelwelle über drei Lagerstellen gelagert ist, die jeweils in einem der Gehäuseteile angeordnet sind wobei eine Lagerstelle (13) zwischen dem Stirnrad (7) und dem exzentrischen Abschnitt (3) angeordnet ist, so dass das Stirnrad (7) und der exzentrische Abschnitt (3) zwischen zwei Lagerstellen (12, 14) angeordnet sind.

2. Hydrostatisch-mechanisches Getriebe nach Anspruch 1, **dadurch gekenntzeichnet, dass** beidseitig des exzentrischen Abschnitts (3) Kegelrollenlager angeordnet sind.

3. Hydrostatisch-mechanisches Getriebe nach Anspruch 1, **dadurch gekennzeichnet, dass** das dem Radialkolbenmotor abgewandte Lager (12) ein Zylinderrollenlager ist.

4. Hydrostatisch-mechanisches Getriebe nach Anspruch 1, **dadurch gekennzeichnet, dass** wobei im ersten Gehäuseteil (15) das Stirnrad (7) und eine Lagerstelle (12) des Stirnrads (7) angeordnet ist, und im zweiten Gehäuseteil (6) die Lagerstelle (13) zwischen dem Stirnrad (7) und dem exzentrischen Abschnitt (3) angeordnet ist, und im dritten Gehäuseteil (5) die andere Lagerstelle (14) des exzentrischen Teils (4) angeordnet ist.

5. Hydrostatisch-mechanisches Getriebe nach Anspruch 4, **dadurch gekennzeichnet, dass** das zweite Gehäuseteil (6) eine Gehäusewand aufweist, welche zwischen dem exzentrischen Teil (3) und dem Stirnrad (7) angeordnet ist und das Lager (13) und Zylinder (4) des Radialkolbenmotors (1) aufnimmt.

6. Hydrostatisch-mechanisches Getriebe nach Anspruch 1, **dadurch gekennzeichnet, dass** das dritte Gehäuseteil (5) mit einem Ventilgehäuse (19) verbunden ist und die Druckmittelzuführungen zu den Zylindern (4) des Radialkolbenmotors (1) beinhaltet.

7. Hydrostatisch-mechanisches Getriebe nach Anspruch 4, **dadurch gekennzeichnet, dass** das erste Gehäuseteil (15) und das zweite Gehäuseteil (6) einen ersten Schmiermittelraum (21) bilden, und das zweite Gehäuseteil (6) und das dritte Gehäuseteil (5) einen zweiten Schmiermittelraum (22) bilden, wobei der erste Schmiermittelraum (21) und der zweite Schmiermittelraum (22) flüssigkeitsdicht voneinander getrennt sind.

8. Hydrostatisch-mechanisches Getriebe nach Anspruch 1, **dadurch gekennzeichnet, dass** das Stirnrad (7) schrägverzahnt ist.

9. Hydrostatisch-mechanisches Getriebe nach Anspruch 4, **dadurch gekennzeichnet, dass** die Lagerung (14), welche im dritten Gehäuseteil (5) angeordnet ist, eine Axialkraft erzeugt, welche der hydraulischen Kraft, welche durch die Druckmittelverteilung (18) auf das dritte Gehäuseteil (5) wirkt, entgegenwirkt.

10. Hydrostatisch-mechanisches Getriebe nach Anspruch 5, **dadurch gekennzeichnet, dass** ein Drehwinkelsensor mit den Aufnahmen des Zylinders (24) so zusammenwirkt, dass das Schluckvolumen des Radialkolbenmotors bestimmbar ist.

## Claims

1. Hydrostatically mechanical transmission with at least one radial piston engine (1) with a crankshaft (2) having an eccentric portion (3), the crankshaft (2) driving a spur wheel (7), and the crankshaft being mounted on each .side of the eccentric portion (3) via bearings (13, 14), **characterized in that** the transmission has a three-part transmission housing and the crankshaft is mounted via three bearing points which are arranged in each case in one of the housing parts, one bearing point (13) being arranged between the spur wheel (7) and the eccentric portion (3), so that the spur wheel (7) and eccentric portion (3) are arranged between two bearing points (12, 14).

2. Hydrostatically mechanical transmission according to Claim 1, **characterized in that** tapered roller bearings are arranged on both sides of the eccentric portion (3).

3. Hydrostatically mechanical transmission according to Claim 1, **characterized in that** the bearing (12) facing away from the radial piston engine is a cylindrical roller bearing.

4. Hydrostatically mechanical transmission according to Claim 1, **characterized in that** the spur wheel (7) and one bearing point (12) of the spur wheel (7) are arranged in the first housing part (15), and the bearing point (13) between the spur wheel (7) and the eccentric portion (3) is arranged in the second housing part (6) and the other bearing point (14) of the eccentric part (4) is arranged in the third housing part (5).

5. Hydrostatically mechanical transmission according to Claim 4, **characterized in that** the second housing part (6) has a housing wall which is arranged between the eccentric part (3) and the spur wheel (7) and receives the bearing (13) and cylinder (4) of the radial piston engine (1).

6. Hydrostatically mechanical transmission according to Claim 1, **characterized in that** the third housing part (5) is connected to a valve housing (19) and contains the pressure-medium supplies to the cylinders (4) of the radial piston engine (1).

7. Hydrostatically mechanical transmission according to Claim 4, **characterized in that** the first housing part (15) and the second housing part (6) form a first lubricant space (21), and the second housing part (6) and the third housing part (5) form a second lubricant space (22), the first lubricant space (21) and the second lubricant space (22) being separated, liquid-tight, from one another.

8. Hydrostatically mechanical transmission according to Claim 1, **characterized in that** the spur wheel (7) is helically toothed.

9. Hydrostatically mechanical transmission according to Claim 4, **characterized in that** the bearing (14) which is arranged in the third housing part (5) generates an axial force which counteracts the hydraulic force which acts on the third housing part (5) as a result of the pressure-medium distribution (18).

10. Hydrostatically mechanical transmission according to Claim 5, **characterized in that** a rotary-angle sensor cooperates with the receptacles of the cylinder (24) such that the absorption volume of the radial piston engine is determinable.

## Revendications

1. Transmission hydrostatique-mécanique comprenant au moins un moteur à piston radial (1) avec un vilebrequin (2) comprenant une portion excentrique (3), le vilebrequin (2) entraînant un pignon droit (7) et le vilebrequin étant monté de chaque côté de la portion excentrique (3) sur des paliers (13, 14), **caractérisée en ce que** la transmission présente une boîte de transmission en trois parties et le vilebrequin est monté sur trois points de palier qui sont disposés chacun dans l'une des parties de la boîte, un point de palier (13) étant disposé entre le pignon droit (7) et la portion excentrique (3), de sorte que le pignon droit (7) et la portion excentrique (3) soient disposés entre deux points de palier (12, 14).

2. Transmission hydrostatique-mécanique selon la revendication 1, **caractérisée en ce que** des paliers à rouleaux coniques sont disposés de chaque côté de la portion excentrique (3).

3. Transmission hydrostatique-mécanique selon la revendication 1, **caractérisée en ce que** le palier (12) opposé au moteur à piston radial est un palier à rouleaux cylindriques.

4. Transmission hydrostatique-mécanique selon la revendication 1, **caractérisée en ce que** dans la première partie de la boîte (15) sont disposés le pignon droit (7) et un point de palier (12) du pignon droit (7), et dans la deuxième partie de la boîte (6) est disposé le point de palier (13) entre le pignon droit (7) et la portion excentrique (3), et dans la troisième portion de la boîte (5) est disposé l'autre point de palier (14) de la partie excentrique (3).

5. Transmission hydrostatique-mécanique selon la revendication 4, **caractérisée en ce que** la deuxième partie de la boîte (6) présente une paroi de boîte qui est disposée entre la partie excentrique (3) et le pignon droit (7) et qui reçoit le palier (13) et le cylindre (4) du moteur à piston radial (1).

6. Transmission hydrostatique-mécanique selon la revendication 1, **caractérisée en ce que** la troisième partie de la boîte (5) est connectée à un boîtier de soupape (19) et contient les alimentations en fluide sous pression aux cylindres (4) du moteur à piston radial (1).

7. Transmission hydrostatique-mécanique selon la revendication 4, **caractérisée en ce que** la première partie de la boîte (15) et la deuxième partie de la boîte (6) forment un premier espace de lubrifiant (21), et la deuxième partie de la boîte (6) et la troisième partie de la boîte (5) forment un deuxième espace de lubrifiant (22), le premier espace de lubrifiant (21) et le deuxième espace de lubrifiant (22) étant séparés l'un de l'autre de manière étanche aux fluides.

8. Transmission hydrostatique-mécanique selon la revendication 1, **caractérisée en ce que** le pignon droit (7) est pourvu de dentures obliques.

9. Transmission hydrostatique-mécanique selon la revendication 4, **caractérisée en ce que** le support sur palier (14), qui est disposé dans la troisième partie de la boîte (5), produit une force axiale qui s'oppose à la force hydraulique qui agit sur la troisième partie de la boîte (5) par distribution du fluide sous pression (18).

10. Transmission hydrostatique-mécanique selon la revendication 5, **caractérisée en ce qu'**un capteur d'angle de rotation coopère avec les logements du cylindre (24), de telle sorte que la cylindrée du moteur à piston radial puisse être déterminée.
